(19) Europäisches Patentamt
European Patent Office
Office européen des brevets

(11) Veröffentlichungsnummer: **0 230 546 B1**

(12) **EUROPÄISCHE PATENTSCHRIFT**

(45) Veröffentlichungstag der Patentschrift: **22.04.92**

(51) Int. Cl.[5]: **C08G 69/44**, C08G 69/32

(21) Anmeldenummer: **86116269.1**

(22) Anmeldetag: **24.11.86**

Die Akte enthält technische Angaben, die nach dem Eingang der Anmeldung eingereicht wurden und die nicht in dieser Patentschrift enthalten sind.

# (54) Vollaromatische mesomorphe Polyesteramide, deren Herstellung und Verwendung.

(30) Priorität: **04.12.85 DE 3542855**

(43) Veröffentlichungstag der Anmeldung:
**05.08.87 Patentblatt 87/32**

(45) Bekanntmachung des Hinweises auf die Patenterteilung:
**22.04.92 Patentblatt 92/17**

(84) Benannte Vertragsstaaten:
**AT BE CH DE FR GB IT LI LU NL SE**

(56) Entgegenhaltungen:
**EP-A- 0 007 715**
**EP-A- 0 063 881**
**EP-A- 0 131 846**
**US-A- 4 375 530**

(73) Patentinhaber: **BASF Aktiengesellschaft**
**Carl-Bosch-Strasse 38**
**W-6700 Ludwigshafen(DE)**

(72) Erfinder: **Hisgen, Bernd, Dr.**
**Goethestrasse 6**
**W-6703 Limburgerhof(DE)**
Erfinder: **Kock, Hans-Jakob, Dr.**
**Benckiserstrasse 63**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 230 546 B1

**Beschreibung**

Gegenstand der Erfindung sind vollaromatische mesomorphe Polyesteramide, die unterhalb 320°C eine flüssigkristalline fadenbildende Schmelze bilden.

Es sind schon eine Reihe von flüssigkristallinen Polyesteramiden bekannt. Solche Polymere sind jedoch hinsichtlich ihrer Wärmeformbeständigkeit, ihrer Verarbeitbarkeit und insbesondere ihrer geringen Abriebfestigkeit verbesserungsbedürftig. In der US-PS 4 330 457 werden Polyesteramide aufgebaut aus Hydroxynaphthalincarbonsäure, Terephthalsäure, Hydrochinon und p-Aminophenol beschrieben. Solche Polyesteramide haben jedoch eine Glasübergangstemperatur von etwa 105°C und somit keine ausreichende Wärmeformbeständigkeit. Das gleiche gilt für die aus der US-PS 4 351 917 bekannten Polyesteramide, die aus p-Aminophenol, p-Hydroxybenzoesäure und Hydroxynaphthalincarbonsäure aufgebaut sind. Aus der EP-A 63 881 sind Polyesteramide bekannt, die aufgebaut sind aus p-Oxybenzoyl- und 2,6-Dicarboxynaphthalineinheiten, aus p-Aminophenol oder p-Phenylendiamin und ggf. p-Dioxyphenyl- und andere carbocyclische Dicarboxyeinheiten. Diese Polyesteramide haben Glasübergangstemperaturen von 115°C und somit ebenfalls keine ausreichende Wärmeformbeständigkeiten. In der EP-PS 7715 werden Polyesteramide, die aus mindestens 50 % Resten von p-Aminophenol sowie Alkoxyterephthalsäure aufgebaut sind, beschrieben. Schließlich sind aus der EP-Anmeldung 81 900 Polyesteramide bekannt, die mindestens zu 40% aus coaxialen Einheiten wie aromatischen Dicarbonsäuren, hydroxyaromatischen Carbonsäuren Bisphenolen und Aminophenolen bestehen und eine ausreichende Menge an nichtlinearen Resten enthalten, die sie von aromatischen m-Amino-Verbindungen oder zwei-kernigen aromatischen Sulfonen ableiten. Es wird jedoch kein Hinweis gegeben, welche Zusammensetzung erforderlich ist, um die gewünschte Eigenschaftskombination zu erzielen.

Es war deshalb die technische Aufgabe gestellt, vollaromatische mesomorphe Polyesteramide zur Verfügung zu stellen, die unterhalb 320°C eine flüssigkristalline, fadenbildende Schmelze bilden und sich somit leicht verarbeiten lassen und darüber hinaus eine hohe Wärmeformbeständigkeit, eine gute Abriebfestigkeit sowie eine gute Zähigkeit aufweisen.

Diese Aufgabe wird gelöst durch vollaromatische, mesomorphe Polyesteramide, die unterhalb 320°C eine flüssigkristalline fadenbildende Schmelze bilden, aufgebaut aus

a) 3 bis 30 Mol.%, insbesondere 5 bis 25 Mol.% wiederkehrenden Einheiten der Formel I

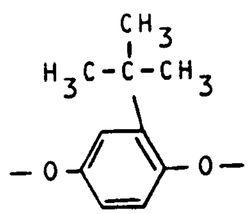

I,

b) 3 bis 30 Mol.%, vorzugsweise 5 bis 25 Mol.% wiederkehrenden Einheiten der Formel II und/oder III

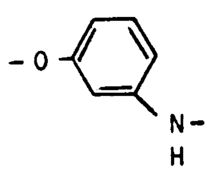

II,

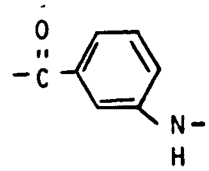

III,

c) 2 bis 25 Mol.%, vorzugsweise 5 bis 20 Mol.%, mindestens einer der wiederkehrenden Einheiten der Formel IV, V oder VI

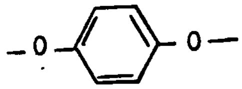

IV,

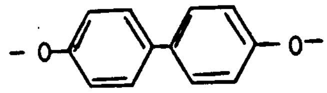

V ,

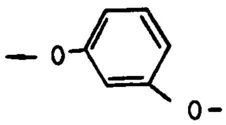

VI ,

d) einer Summe aus den Komponenten a), b) und c), ausgenommen der Einheit der Formel III entsprechenden molaren Menge an wiederkehrenden Einheiten der Formel VII

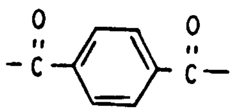

VII ,

die gegebenenfalls teilweise durch wiederkehrende Einheiten der Formel VIII

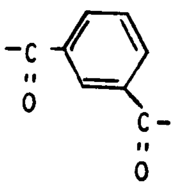

VIII ,

ersetzt sein kann, wobei wiederkehrende Einheiten der Formel VII bevorzugt sind,
e) gegebenenfalls 5 bis 25 Mol.% wiederkehrenden Einheiten der Formel IX

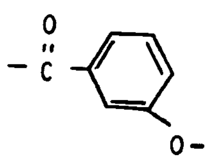

IX ,

f) wiederkehrenden Einheiten der Formel X, vorteilhaft in einer Menge von mindestens 10 Mol.%

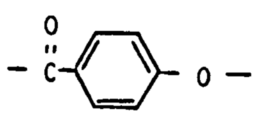

X ,

wobei sich die molaren Anteile der Komponenten a) bis f) jeweils zu 100 Mol.% ergänzen.

Die neuen vollaromatischen Polyesteramide haben den Vorteil, eine hohe Wärmeformbeständigkeit mit einer glatten abriebfesten Oberfläche zu verbinden. Weiterhin zeichnen sich die neuen Polyesteramide durch hohe Steifigkeit, Festigkeit und Zähigkeit aus. Zudem sind die neuen Polyesteramide weitgehend

chemikalienbeständig und schwer brennbar. Darüber hinaus sind die neuen Polyesteramide bei einer Temperatur unter 320 ° C aus der Schmelze verarbeitbar.

Der flüssigkristalline Zustand der Polyesteramide kann mit dem Polarisationsmikroskop nach einer in der DE-AS 2 520 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Bevorzugte Ausgangsstoffe für die erfindungsgemäßen Polyesteramide sind: für Einheiten der Formel I t-Butylhydrochinon,
für Einheiten der Formel II m-Aminophenol,
für Einheiten der Formel III m-Aminobenzoesäure,
für Einheiten der Formel IV Hydrochinon,
für Einheiten der Formel V 4,4'-Dihydroxidiphenyl,
für Einheiten der Formel VI Resorcin,
für Einheiten der Formel VII Terephthalsäure,
für Einheiten der Formel VIII Isophthalsäure
für Einheiten der Formel IX m-Hydroxybenzoesäure und
für Einheiten der Formel X p-Hydroxybenzoesäure.

Bevorzugte Polyesteramide enthalten 5 bis 20 Mol.% wiederkehrende Einheiten der Formel I 5 bis 20 Mol.% wiederkehrende Einheiten der Formel II und 5 bis 20 Mol.% der Formel IV.

Andere bevorzugte Polyesteramide enthalten 5 bis 20 Mol.% Einheiten der Formel I, 5 bis 20 Mol.% Einheiten der Formel III sowie 5 bis 20 Mol.% wiederkehrende Einheiten der Formeln IV und V.

Weitere bevorzugte Polyesteramide enthalten 5 bis 20 Mol.% Einheiten der Formel I, 5 bis 20 Mol.% Einheiten der Formel III für die 5 bis 20 Mol.% Einheiten der Formel IV.

Bevorzugte vollaromatische Polyesteramide nach der Erfindung haben eine Glasübergangstemperatur Tg von 140 ° C, insbesondere 150 ° C. Die Glastemperatur wird gemessen mit der DSC-Methode, wie sie beschrieben ist in Makromol. Chem., 127 (1969), Seiten 1 ff. Die vollaromatischen flüssigkristallinen Polyesteramide gemäß der Erfindung bilden bei einer Temperatur 320 ° C eine flüssigkristalline fadenbildende Schmelze. Bevorzugt sind auch flüssigkristalline aromatische Polyesteramide, die bei einer Temperatur 200 ° C und 300 ° C Teilkristallinität aufweisen.

Die erfindungsgemäßen flüssigkristallinen Polyesteramide lassen sich erhalten analog nach Techniken, wie sie beispielsweise in der US-PS 4 375 530 und US-PS 4 118 372 beschrieben werden.

Nach einer vorteilhaften Arbeitsweise erhält man die erfindungsgemäßen Polyersteramide in einem Einstufenverfahren, bei dem man die nicht derivatisierten Ausgangsverbindungen unter Verwendung von Anhydriden niederer Fettsäuren, z.B. Fettsäuren mit 2 bis 4 Kohlenstoffatomen, insbesondere Essigsäureanhydrid umsetzt. Es ist möglich, hierbei Katalysatoren, wie sie aus der EP-Anmeldung 131 846 bekannt sind, in üblichen Mengen mitzuverwenden. Bei der Umsetzung werden die nicht derivatisierten Hydroxy-Amino- und Carboxyverbindungen zusammen mit Fettsäureanhydrid, vorteilhaft in einem mindestens 5%igen molaren Überschuß, bezogen auf die vorhandenen Hydroxy- und Aminogruppen, unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden, vorzugsweise bis zu 2 Stunden auf 130 bis 200 ° C. Anschließend wird die Temperatur, z.B. innerhalb von 2 bis 2 1/2 Stunden auf 250 bis 350 ° C gesteigert. Hierbei werden überschüssige Fettsäureanhydride und Fettsäuren abdestilliert. Um die Reaktion zu vervollständigen, hat es sich als vorteilhaft erwiesen, gegen Ende der Umsetzung verminderten Druck, z.B. von 200 bis 0,1 mbar anzuwenden.

Bemerkenswert und nicht vorherzusehen bei der Anwendung dieses Einstufenverfahrens ist zunächst die problemlose und vollständige Reaktion ohne Katalysatorzusatz zu den gewünschten Polymeren in einer relativ kurzen Zeit. Dies ist umso bemerkenswerter als durch die Vielzahl chemisch unterschiedlicher Hydroxy- und Aminogruppen eine Abstufung der Reaktivitäten und damit ein mangelhafter polymerer Aufbau zu erwarten wäre.

Die so erhaltenen vollaromatischen flüssig-kristallinen Polyesteramide werden vorteilhaft in festem Zustand, z.B. bei Temperaturen von 150 bis 250 ° C bis zur gewünschten Viskosität weiter kondensiert. Diese Nachkondensation in fester Phase kann sowohl vor als auch nach einer thermoplastischen Verarbeitung erfolgen. Die Festphasenkondensation führt man vorteilhaft in Inertgasatmosphäre, z.B. unter Stickstoff durch.

Den Polyesteramiden können übliche Zusatz- und Hilfsstoffe in wirksamen Mengen zugesetzt werden. Übliche Zusatz- und Hilfsstoffe sind Stabilisatoren, Oxidationsverzögerer und Mittel gegen Wärmezersetzung und Zersetzung durch ultraviolettes Licht, Gleit- und Entformungsmittel, Färbemittel, wie Farbstoffe oder Pigmente, faser- oder pulverförmige Füll- und Verstärkungsmittel, Keimbildungsmittel oder Weichmacher.

Stabilisatoren können den Polymeren in jedem Stadium der Herstellung oder den fertigen Polymeren zugesetzt werden. Vorzugsweise werden die Stabilisatoren zu einem frühen Zeitpunkt zugesetzt, um zu verhindern, daß die Zersetzung bereits beginnt, bevor die Polymeren geschützt werden können.

Geeignete Oxidationsverzögerer und Wärmestabilisatoren sind beispielsweise Halogenide von Metallen der Gruppe I des Periodischen Systems, z.B. von Natrium, Kalium oder Lithium mit Kupfer-(I)-halogeniden, wie Chloriden, Bromiden, Jodiden, sterisch gehinderte Phenole, Hydrochinone, verschiedene substituierte Vertreter dieser Gruppen in Kombinationen derselben in Konzentrationen bis zu 1 Gew.%, bezogen auf das Polymere.

Geeignete UV-Stabilisatoren sind beispielsweise substituierte Resorcine, Salicylate, Benzotriazole, Benzophenone und dergleichen sowie Mischungen derselben. Solche UV-Stabilisatoren werden in der Regel in Mengen bis zu 2 Gew.% auf das Polymere angewandt.

Geeignete Hilfsstoffe sind auch Farbstoffe, die im allgemeinen in Mengen bis zu 5 Gew.% angewandt werden, wie Nigrosin, Pigmente, wie Titandioxid, Cadmiumsulfid, Cadmiumsulfid-selenid, Phthalocyanine, Ultramirinblau oder Ruß.

Geeignete faser- oder pulverförmige Füllstoffe und Verstärkungsmittel, die in Mengen z.B. bis zu 70 Gew.% auf das Polymere angewandt werden, sind beispielsweise Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer oder Feldspat.

Geeignete Keimbildungsmittel sind beispielsweise Talkum, Calciumfluorid, Natriumphenylphosphinat, Aluminiumoxid oder feinteiliges Polytetrafluorethylen.

Schließlich sind geeignete Zusatzstoffe Weichmacher in Mengen z.B. bis zu 20 Gew.%, wie Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid.

Die erfindungsgemäßen vollaromatischen flüssigkristallinen Polyesteramide eigenen sich zur Herstellung von Fäden, Fasern, Folien, Schäumen und technischen Formteilen durch Spritzguß, Pressen oder Extrusion. Die aus den erfindungsgemäßen Polyesteramiden hergestellten Formteile zeichnen sich aus durch hervorragende mechanische Eigenschaften, wie Steifigkeit, Festigkeit und Zähigkeit. Sie sind außerordentlich chemikalienresistent und flammwidrig. Zudem besitzen sie eine hohe Wärmeformbeständigkeit und eine glatte, abriebfeste Oberfläche. Die erfindungsgemäßen Polyesteramide eignen sich daher hervorragend zur Herstellung von Formteilen für die Elektro- und Datentechnik, den Fahrzeugbau und andere technische Bereiche. Sie können aber auch als Überzugs- und Beschichtungsmittel, pulverförmig dispergiert, oder als Film verwendet werden.

Die Erfindung sei an folgenden Beispielen veranschaulicht.

## Beispiel 1

0,24 mol Terephthalsäure, 0,312 mol 4-Hydroxibenzoesäure, 0,12 mol t-Butylhydrochinon, 0,12 mol m-Aminophenol und 101 ml Acetanhydrid werden unter Stickstoffatmosphäre und Rühren innerhalb von 2h50min von 150 ° C auf 300 ° C erhitzt. Dabei wird überschüssiges Acetanhydrid und Essigsäure abdestilliert. Anschließend wird innerhalb 1h20min der Druck auf 30 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 165 ° C und eine Schmelztemp. von 300 ° C. Die inhärente Viskosität beträgt 0,78 dl/g, gemessen in 0,1%iger (Gew/Vol) Lösung in Pentafluorphenol bei 60 ° C.

## Beispiel 2

0,22 mol Terephthalsäure, 0,143 mol 4-Hydroxibenzoesäure, 0,077 mol Hydrochinon, 0,099 mol t-Butylhydrochinon, 0,044 mol 4,4'-Dihydroxybiphenyl, 0,143 mol 3-Aminobenzoesäure und 93 ml Acetanhydrid werden unter Stickstoffatmosphäre und Rühren innerhalb von 2h50min von 150 ° C auf 300 ° C erhitzt. Dabei wird überschüssiges Acetanhydrid und Essigsäure abdestilliert. Anschließend wird innerhalb 50 min der Druck auf 65 bar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 172 ° C.

Die inhärente Viskosität betragt 0,58 dl/g, gemessen in 0,5%iger (Gew/Vol) Lösung in 4 Chlorphenol bei 60 ° C.

## Patentansprüche

## Patentansprüche für folgende Vertragsstaaten : BE, CH, DE, FR, GB, IT, LI, LU, NL, SE

**1.** Vollaromatische mesomorphe Polyesteramide, die unterhalb 320 °C eine flüssigkristalline fadenbildende Schmelze bilden, aufgebaut aus

a) wiederkehrenden Einheiten der Formel I

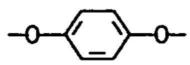

I,

wobei der Benzolring durch $C_1$- bis $C_4$-Alkylgruppen substituiert sein kann,

b) wiederkehrenden Einheiten der Formel II und/oder III

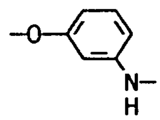

II,

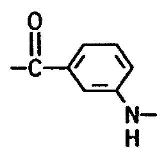

III,

c) mindestens einer der wiederkehrenden Einheiten der Formel IV, V oder VI

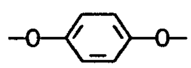

IV,

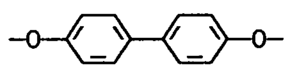

V,

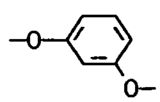

VI,

d) wiederkehrenden Einheiten der Formel VII

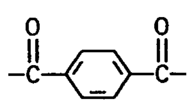

VII,

die teilweise durch wiederkehrende Einheiten der Formel VIII

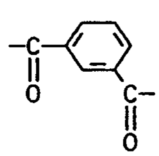

VIII,

ersetzt sein können

e) gegebenenfalls wiederkehrenden Einheiten der Formel IX

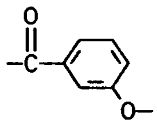

IX,

f) wiederkehrenden Einheiten der Formel X

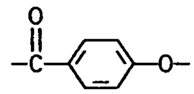

X,

dadurch gekennzeichnet, daß als Komponente a) wiederkehrende Einheiten der Formel I eingesetzt werden, wobei der Benzolring durch eine t-Butylgruppe substituiert ist und wobei
die Komponente a) in einem Anteil von 3 bis 30 Mol.%,
die Komponente b) in einem Anteil von 3 bis 30 Mol.%,
die Komponente c) in einem Anteil von 2 bis 25 Mol.%,
die Komponente d) in einem Anteil einer Summe aus den Komponenten a), b) und c), ausschließlich der wiederkehrenden Einheit der Formel III entsprechenden Menge,
die Komponente e) gegebenenfalls in einem Anteil von 5 bis 25 Mol.%
vorhanden sind,
wobei die Summe der molaren Anteile der Komponenten a), b), c), d), e) und f) jeweils 100 Mol.% ergibt.

**2.** Vollaromatische mesomorphe Polyesteramide nach Anspruch 1, dadurch gekennzeichnet, daß sie aufgebaut sind aus
a) 5 bis 25 Mol.% wiederkehrenden Einheiten der Formel I
b) 5 bis 25 Mol.% wiederkehrenden Einheiten der Formel II und/oder III
c) 5 bis 20 Mol.% mindestens eine der wiederkehrenden Einheiten der Formeln IV, V und VI
d) einer Summe aus den Komponenten a), b) und c) ausschließlich der wiederkehrenden Einheit der Formel III entsprechenden molaren Menge an wiederkehrenden Einheiten der Formel VII
sowie
f) wiederkehrende Einheiten der Formel X,
wobei sich die Summe der molaren Anteile der Komponenten a), b), c), d) und f) jeweils zu 100 Mol.% ergänzen.

**3.** Vollaromatische mesomorphe Polyesteramide nach den Ansprüchen 1 und 2, dadurch gekennzeichnet, daß sie als Komponente a) 5 bis 20 Mol.% wiederkehrende Einheiten der Formel I, als Komponente b) 5 bis 20 Mol.% wiederkehrende Einheiten der Formel II und als Komponente c) 5 bis 20 Mol.% wiederkehrende Einheiten der Formel IV enthalten.

**4.** Vollaromatische mesomorphe Polyesteramide nach den Ansprüchen 1 und 2, dadurch gekennzeichnet, daß sie als Komponente a) 5 bis 20 Mol.% der wiederkehrenden Einheiten der Formel I als Komponente b) 5 bis 20 Mol.% wiederkehrende Einheiten der Formel III und als Komponente c) 5 bis 20 Mol.% eines Gemisches aus wiederkehrenden Einheiten der Formeln IV und V enthalten.

**5.** Vollaromatische mesomorphe Polyesteramide nach den Ansprüchen 1 und 2, dadurch gekennzeichnet, daß sie als Komponente a) 5 bis 20 Mol.% der wiederkehrenden Einheiten der Formel I als Komponente b) 5 bis 20 Mol.% wiederkehrende Einheiten der Formel III und als Komponente c) 5 bis 20 Mol.% wiederkehrende Einheit die der Formel IV enthalten.

**6.** Vollaromatische mesomorphe Polyesteramide nach den Ansprüchen 1 bis 5, dadurch gekennzeichnet, daß sie eine Glastemperatur Tg $\geqq$ 140 ° C haben.

**7.** Verfahren zur Herstellung von vollaromatischen mesomorphen Polyesteramiden nach den Ansprüchen 1 bis 6, dadurch gekennzeichnet, daß man die Monomere in Form der underivatisierten Hydroxy-, Amino-bzw. Carboxy-Verbindungen in einem Einstufenverfahren und in den beschriebenen molaren

Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

8. Verfahren nach Anspruch 7, dadurch gekennzeichnet, daß man die vollaromatischen Polyesteramide nach den Kondensation in der Schmelze durch Kondensation in fester Phase bei einer Temperatur von 150 bis 250 ° C nachkondensiert.

9. Verwendung von vollaromatischen mesomorphen Polyesteramiden nach den Ansprüchen 1 bis 6 zur Herstellung von Fäden, Fasern, Folien und Formteilen.

**Patentansprüche für folgenden Vertragsstaat : AT**

1. Verfahren zur Herstellung von vollaromatischen mesomorphen Polyesteramiden, die unterhalb 320 ° C eine flüssigkristalline fadenbildende Schmelze bilden, aufgebaut aus

a) wiederkehrenden Einheiten der Formel I

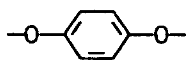

I,

wobei der Benzolring durch $C_1$- bis $C_4$-Alkylgruppen substituiert sein kann,

b) wiederkehrenden Einheiten der Formel II und/oder III

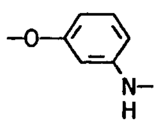

II,

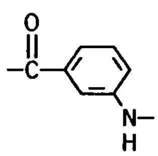

III,

c) mindestens einer der wiederkehrenden Einheiten der Formel IV, V oder VI

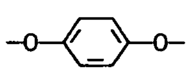

IV,

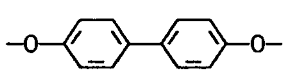

V,

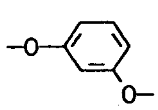

VI,

d) wiederkehrenden Einheiten der Formel VII

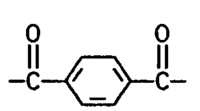

VII,

die teilweise durch wiederkehrende Einheiten der Formel VIII

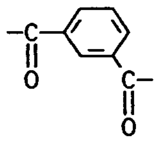

VIII,

ersetzt sein können
e) gegebenenfalls wiederkehrenden Einheiten der Formel IX

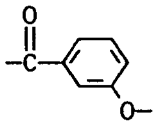

IX,

f) wiederkehrenden Einheiten der Formel X

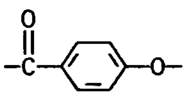

X,

dadurch gekennzeichnet, daß als Komponente a) Ausgangsverbindungen eingesetzt werden, die wiederkehrende Einheiten der Formel I ergeben, wobei der Benzolring durch eine t-Butylgruppe substituiert ist und wobei
die, die Komponente a) in einem Anteil von 3 bis 30 Mol.%,
die, die Komponente b) in einem Anteil von 3 bis 30 Mol.%,
die, die Komponente c) in einem Anteil von 2 bis 25 Mol.%,
die, die Komponente d) in einem Anteil einer Summe aus den Komponenten a), b) und c), ausschließlich der wiederkehrenden Einheit der Formel III entsprechenden Menge,
die, die Komponente e) gegebenenfalls in einem Anteil von 5 bis 25 Mol.%
ergebenden Hydroxy-, Amino- und Carboxyverbindungen oder deren Ester bildenden Derivate umgesetzt werden,
wobei die Summe der molaren Anteile der Komponenten a), b), c), d), e) und f) jeweils 100 Mol.% ergibt.

**2.** Verfahren nach Anspruch 1, dadurch gekennzeichnet, daß die vollaromatischen mesomorphen Polyesteramide aufgebaut sind aus
a) 5 bis 25 Mol.% wiederkehrenden Einheiten der Formel I
b) 5 bis 25 Mol.% wiederkehrenden Einheiten der Formel II und/oder III
c) 5 bis 20 Mol.% mindestens eine der wiederkehrenden Einheiten der Formeln IV, V und VI
d) einer Summe aus den Komponenten a), b) und c) ausschließlich der wiederkehrenden Einheit der Formel III entsprechenden molaren Menge an wiederkehrenden Einheiten der Formel VII
sowie
f) wiederkehrende Einheiten der Formel X,
wobei sich die Summe der molaren Anteile der Komponenten a), b), c), d) und f) jeweils zu 100 Mol.% ergänzen.

**3.** Verfahren nach den Ansprüchen 1 und 2, dadurch gekennzeichnet, daß die vollaromatischen mesomorphen Polyesteramide als Komponente a) 5 bis 20 Mol.% wiederkehrende Einheiten der Formel I, als Komponente b) 5 bis 20 Mol.% wiederkehrende Einheiten der Formel II und als Komponente c) 5 bis 20 Mol.% wiederkehrende Einheiten der Formel IV enthalten.

**4.** Verfahren nach den Ansprüchen 1 und 2, dadurch gekennzeichnet, daß die vollaromatischen mesomorphen Polyesteramide als Komponente a) 5 bis 20 Mol.% der wiederkehrenden Einheiten der Formel I als Komponente b) 5 bis 20 Mol.% wiederkehrende Einheiten der Formel III und als Komponente c) 5 bis 20 Mol.% eines Gemisches aus wiederkehrenden Einheiten der Formeln IV und V enthalten.

**5.** Verfahren nach den Ansprüchen 1 und 2, dadurch gekennzeichnet, daß die vollaromatischen mesomorphen Polyesteramide als Komponente a) 5 bis 20 Mol.% wiederkehrende Einheiten der Formel I als Komponente b) 5 bis 20 Mol.% wiederkehrende Einheiten der Formel III und als Komponente c) 5 bis 20 Mol.% wiederkehrende Einheit die der Formel IV enthalten.

**6.** Verfahren nach den Ansprüchen 1 bis 5, dadurch gekennzeichnet, daß die vollaromatischen mesomorphen Polyesteramide eine Glastemperatur Tg ≧ 140 ° C haben.

**7.** Verfahren nach den Ansprüchen 1 bis 6, dadurch gekennzeichnet, daß man die Monomere in Form der underivatisierten Hydroxy-, Amino-bzw. Carboxy-Verbindungen in einem Einstufenverfahren und in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

**8.** Verfahren nach den Ansprüchen 1 bis 7, dadurch gekennzeichnet, daß man die vollaromatischen Polyesteramide nach der Kondensation in der Schmelze durch Kondensation in fester Phase bei einer Temperatur von 150 bis 250 ° C nachkondensiert.

**9.** Verfahren zur Herstellung von Fäden, Folien, Fasern, Schäumen und Formteilen durch Spritzguß, Pressen oder Extrusion unter Verwendung der Verfahrensprodukte gemäß den Ansprüchen 1 bis 8.

**Claims**
**Claims for the following Contracting States : BE, CH, DE, FR, GB, IT, LI, LU, NL, SE**

**1.** A wholly aromatic mesomorphic polyester amide which forms a liquid-crystalline fiber-forming melt below 320 ° C, composed of

a) repeat units of the formula I

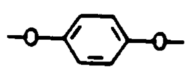

I

where the benzene ring may be substituted by $C_1$-$C_4$-alkyl,

b) repeat units of the formula II or III

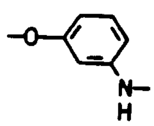

II

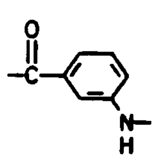

III

c) one or more of the repeat units of the formula IV, V or VI,

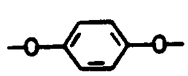

IV

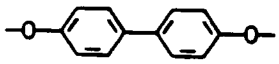

V

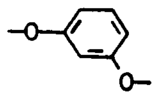

VI

d) repeat units of the formula VII

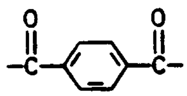

VII

which can in part be replaced by repeat units of the formula VIII

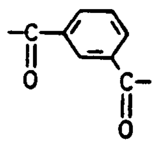

VIII

e) if desired repeat units of the formula IX

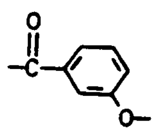

IX

f) repeat units of the formula X

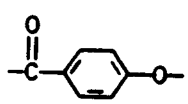

X

wherein component a) comprises repeat units of the formula I where the benzene ring is substituted by a t-butyl group, component a) being present in a proportion of from 3 to 30 mol %, component b) being present in a proportion of from 3 to 30 mol %, component c) being present in a proportion of from 2 to 25 mol %, component d) being present in a proportion corresponding to the sum total of components a), b) and c) excluding the amount corresponding to the repeat unit of the formula III, component e) optionally being present in a proportion of from 5 to 25 mol %,

and the molar proportions of components a), b), c), d), e) and f) adding up to 100 mol %.

**2.** A wholly aromatic mesomorphic polyester amide as claimed in claim 1, composed of

a) from 5 to 25 mol % of repeat units of the formula I

b) from 5 to 25 mol % of repeat units of the formula II or III

c) from 5 to 20 mol % of one or more repeat units of the formulae IV, V and VI

d) a molar amount corresponding to the total amount of components a), b) and c) excluding the repeat unit of the formula III, of repeat units of the formula VII and

f) repeat units of the formula X,

the molar proportions of components a), b), c), d) and f) adding up to 100 mol %.

**3.** A wholly aromatic mesomorphic polyester amide as claimed in claim 1 or 2, which contains as

component a) from 5 to 20 mol % of repeat units of the formula I, as component b) from 5 to 20 mol % of repeat units of the formula II and as component c) from 5 to 20 mol % of repeat units of the formula IV.

**4.** A wholly aromatic mesomorphic polyester amide as claimed in claim 1 or 2, which contains as component a) from 5 to 20 mol % of repeat units of the formula I, as component b) from 5 to 20 mol % of repeat units of the formula III and as component c) from 5 to 20 mol % of a mixture of repeat units of the formulae IV and V.

**5.** A wholly aromatic mesomorphic polyester amide as claimed in claim 1 or 2, which contains as component a) from 5 to 20 mol % of repeat units of the formula I, as component b) from 5 to 20 mol % of repeat units of the formula III and as component c) from 5 to 20 mol % of repeat units of the formula IV.

**6.** A wholly aromatic mesomorphic polyester amide as claimed in any of claims 1 to 5, which has a glass transition temperature Tg ≧ 140 ° C.

**7.** A process for preparing a wholly aromatic mesomorphic polyester amide as claimed in any of claims 1 to 6, which comprises reacting the monomers in the form of the underivatized hydroxyamino and carboxy compounds in a single-stage process and in the molar ratios described in the presence of excess fatty acid anhydride at elevated temperature, and distilling fatty acid anhydride and fatty acid out of the reaction mixture.

**8.** A process as claimed in claim 7, wherein after the condensation in the melt the wholly aromatic polyester amide is post condensed in solid phase at 150 - 250 ° C.

**9.** Use of a wholly aromatic mesomorphic polyester amide as claimed in any of claims 1 to 6 for producing filaments, fibers, films and moldings.

**Claims for the following Contracting State : AT**

**1.** A process for preparing a wholly aromatic mesomorphic polyester amide which forms a liquid-crystalline fiber-forming melt below 320 ° C, composed of

a) repeat units of the formula I

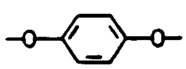

I

where the benzene ring may be substituted by $C_1$-$C_4$-alkyl,

b) repeat units of the formula II or III

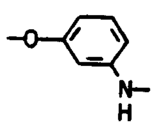

II

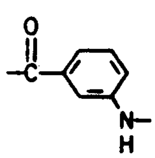

III

c) one or more of the repeat units of the formula IV, V or VI,

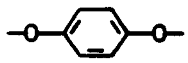

IV

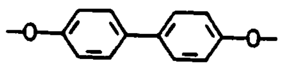

V

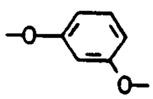

VI

d) repeat units of the formula VII

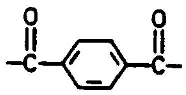

VII

which can in part be replaced by repeat units of the formula VIII

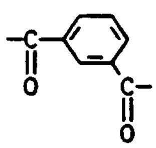

VIII

e) if desired repeat units of the formula IX

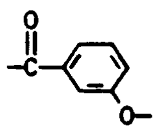

IX

f) repeat units of the formula X

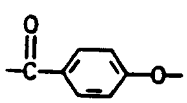

X

which comprises using as component a) a starting compound which results in repeat units of the formula I where the benzene ring is substituted by a t-butyl group and reacting the hydroxy, amino and carboxy compounds, or the esterforming derivatives thereof, which produce component a) in a proportion of from 3 to 30 mol %, component b) in a proportion of from 3 to 30 mol %, component c) in a proportion of from 2 to 25 mol %, component d) in a proportion corresponding to the sum total of components a), b) and c) excluding the amount corresponding to the repeat unit of the

formula III, and optionally component e) in a proportion of from 5 to 25 mol %,
and the molar proportions of components a), b), c), d), e) and f) adding up to 100 mol %.

**2.** A process as claimed in claim 1, wherein the wholly aromatic mesomorphic polyester amide is composed of
a) from 5 to 25 mol % of repeat units of the formula I
b) from 5 to 25 mol % of repeat units of the formula II or III
c) from 5 to 20 mol % of one or more repeat units of the formulae IV, V and VI
d) a molar amount corresponding to the total amount of components a), b) and c) excluding the repeat unit of the formula III, of repeat units of the formula VII and
f) repeat units of the formula X,
the molar proportions of components a), b), c), d) and f) adding up to 100 mol %.

**3.** A process as claimed in claim 1 or 2, wherein the wholly aromatic mesomorphic polyester amide contains as component a) from 5 to 20 mol % of repeat units of the formula I, as component b) from 5 to 20 mol % of repeat units of the formula II and as component c) from 5 to 20 mol % of repeat units of the formula IV.

**4.** A process as claimed in claim 1 or 2, wherein the wholly aromatic mesomorphic polyester amide contains as component a) from 5 to 20 mol % of repeat units of the formula I, as component b) from 5 to 20 mol % of repeat units of the formula III and as component c) from 5 to 20 mol % of a mixture of repeat units of the formulae IV and V.

**5.** A process as claimed in claim 1 or 2, wherein the wholly aromatic mesomorphic polyester amide contains as component a) from 5 to 20 mol % of repeat units of the formula I, as component b) from 5 to 20 mol % of repeat units of the formula III and as component c) from 5 to 20 mol % of repeat units of the formula IV.

**6.** A process as claimed in any of claims 1 to 5, wherein the wholly aromatic mesomorphic polyester amide has a glass transition temperature Tg ≧ 140 ° C.

**7.** A process as claimed in any of claims 1 to 6, which comprises reacting the monomers in the form of the underivatized hydroxy, amino and carboxy compounds in a single-stage process and in the molar ratios described in the presence of excess fatty acid anhydride at elevated temperature, and distilling fatty acid anhydride and fatty acid out of the reaction mixture.

**8.** A process as claimed in any of claims 1 to 7, wherein after the condensation in the melt the wholly aromatic polyester amide is post condensed in solid phase at 150 - 250 ° C.

**9.** A process for producing filaments, films, fibers, foams and moldings by injection, compression or extrusion molding using the products of the process as claimed in any of claims 1 to 8.

**Revendications**
**Revendications pour les Etats contractants suivants : BE, CH, DE, FR, GB, IT, LI, LU, NL, SE**

**1.** Polyesteramides mésomorphes totalement aromatiques qui forment, au-dessous de 320 ° C, une masse fondue cristalline liquide formant des fibres, constitués par
a) des motifs répétitifs de formule I

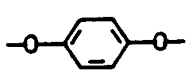

I,

le noyau benzénique pouvant être substitué par des groupements alkyle en $C_1$ à $C_4$,
b) des motifs répétitifs de formules II et/ou III

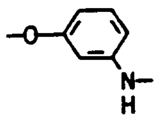

II,

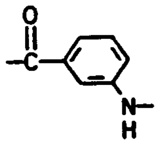

III,

c) au moins l'un des motifs répétitifs de formule IV, V ou VI

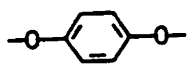

IV,

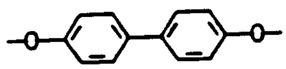

V,

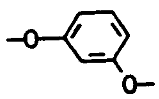

VI,

d) des motifs répétitifs de formule VII

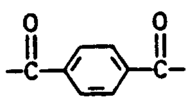

VII,

qui peuvent être remplacés en partie par des motifs répétitifs de formule VIII

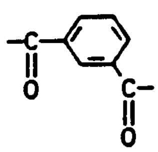

VIII,

e) éventuellement des motifs répétitifs de formule IX

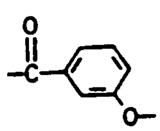

IX,

f) des motifs répétitifs de formule X

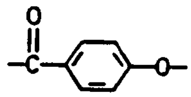

X,

caractérisés en ce qu'il est utilisé, comme composent a), des motifs répétitifs de formule I, le noyau benzénique étant substitué par un groupement t-butyle et le composent a) étant présent à raison de 3 à 30% en moles,
le composent b) étant présent à raison de 3 à 30% en moles,
le composent c) étant présent à raison de 2 à 25% en moles,
le composent d) étant présent à raison d'une quantité correspondant à la somme des composants a), b) et c), à l'exclusion du motif répétitif de formule III,
le composent e) étant éventuellement présent à raison de 5 à 25% en moles,
la somme des proportions molaires des composants a), b), c), d), e) et f) étant chaque fois égale à 100% en moles.

**2.** Polyesteramides mésomorphes totalement aromatiques selon la revendication 1, caractérisés en ce qu'ils sont constitués par
a) 5 à 25% en moles de motifs répétitifs de formule I,
b) 5 à 25% en moles de motifs répétitifs de formules II et/ou III,
c) 5 à 20% en moles de l'un au moins des motifs répétitifs de formules IV, V et VI,
d) une quantité molaire de motifs répétitifs de formule VII correspondant à la somme des composants a), b) et c) à l'exclusion du motif répétitif de formule III, et
f) des motifs répétitifs de formule X,
la somme des proportions molaires des composants a), b), c), d) et f) donnant chaque fois un total de 100% en moles.

**3.** Polyesteramides mésomorphes totalement aromatiques selon la revendication 1 ou 2, caractérisés en ce qu'ils contiennent, comme composent a), de 5 à 20% en moles de motifs répétitifs de formule I; comme composant b), de 5 à 20% en moles de motifs répétitifs de formule II; et, comme composant c), de 5 à 20% en moles de motifs répétitifs de formule IV.

**4.** Polyesteramides mésomorphes totalement aromatiques selon la revendication 1 ou 2, caractérisés en ce qu'ils contiennent, comme composant a), de 5 à 20% en moles de motifs répétitifs de formule I; comme composant b), de 5 à 20% en moles de motifs répétitifs de formule III; et, comme composant c), de 5 à 20% en moles d'un mélange de motifs répétitifs de formules IV et V.

**5.** Polyesteramides mésomorphes totalement aromatiques selon la revendication 1 ou 2, caractérisés en ce qu'ils contiennent, comme composant a), de 5 à 20% en moles de motifs répétitifs de formule I; comme composant b), de 5 à 20% en moles de motifs répétitifs de formule III; et, comme composant c), de 5 à 20% en moles de motifs répétitifs de formule IV.

**6.** Polyesteramides mésomorphes totalement aromatiques selon l'une quelconque des revendications 1 à 5, caractérisés en ce qu'ils ont une température de transition vitreuse Tg ≧ 140 ° C.

**7.** Procédé de préparation de polyesteramides mésomorphes totalement aromatiques selon l'une quelconque des revendications, caractérisé en ce qu'on fait réagir les monomères sous forme des composés hydroxy, amino ou carboxy non dérivatisés, en un procédé en une seule étape et dans les rapports molaires prescrits, avec addition d'anhydride d'acide gras en excès et à température élevée, et on chasse du mélange réactionnel l'anhydride d'acide gras et l'acide gras par distillation.

**8.** Procédé selon la revendication 7, caractérisé en ce qu'après la condensation dans la masse fondue, on soumet les polyesteramides totalement aromatiques à une post-condensation en phase solide à une température de 150 à 250 ° C.

**9.** Utilisation de polyesteramides mésomorphes totalement aromatiques selon l'une quelconque des revendications 1 à 6 pour la fabrication de fils, de fibres, de feuilles et de pièces moulées.

**Revendications pour l'Etat contractant suivant : AT**

**1.** Procédé de préparation de polyesteramides mésomorphes totalement aromatiques qui forment, au-dessous de 320 ° C, une masse fondue cristalline liquide formant des fibres, constitués par
a) des motifs répétitifs de formule I

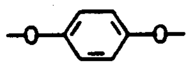

I,

le noyau benzénique pouvant être substitué par des groupements alkyle en $C_1$ à $C_4$,

b) des motifs répétitifs de formules II et/ou III

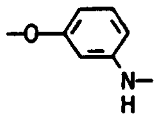

II,

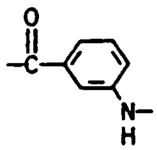

III,

c) au moins l'un des motifs répétitifs de formule IV, V ou VI

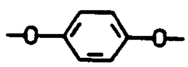

IV,

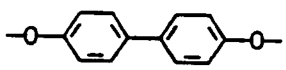

V,

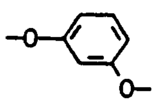

VI,

d) des motifs répétitifs de formule VII

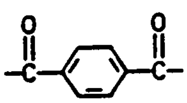

VII,

qui peuvent être remplacés en partie par des motifs répétitifs de formule VIII

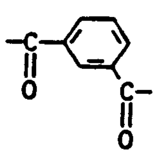

VIII,

e) éventuellement des motifs répétitifs de formule IX

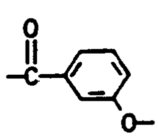

IX,

f) des motifs répétitifs de formule X

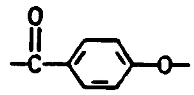

X,

caractérisé en ce qu'on utilise, comme composant a), des composés de départ qui donnent des motifs répétitifs de formule I, le noyau benzénique étant substitué par un groupement t-butyle, et on fait réagir les composés hydroxy, amino et carboxyle ou leurs dérivés formant des esters, qui donnent
le composant a) à raison de 3 à 30% en moles,
le composant b) à raison de 3 à 30% en moles,
le composant c) à raison de 2 à 25% en moles,
le composant d) à raison d'une quantité correspondant à la somme des composants a), b) et c), à l'exclusion du motif répétitif de formule III,
éventuellement le composant e) à raison de 5 à 25% en moles,
la somme des proportions molaires des composants a), b), c), d), e) et f) étant chaque fois égale à 100% en moles.

**2.** Procédé selon la revendication 1, caractérisé en ce que les polyesteramides mésomorphes totalement aromatiques sont constitués par
a) 5 à 25% en moles de motifs répétitifs de formule I,
b) 5 à 25% en moles de motifs répétitifs de formules II et/ou III,
c) 5 à 20% en moles de l'un au moins des motifs répétitifs de formules IV, V et VI,
d) une quantité molaire de motifs répétitifs de formule VII correspondant à la somme des composants a), b) et c) à l'exclusion du motif répétitif de formule III, et
f) des motifs répétitifs de formule X,
la somme des proportions molaires des composants a), b), c), d) et f) donnant chaque fois un total de 100% en moles.

**3.** Procédé selon la revendication 1 ou 2, caractérisé en ce que les polyesteramides mésomorphes totalement aromatiques contiennent, comme composant a), de 5 à 20% en moles de motifs répétitifs de formule I; comme composant b), de 5 à 20% en moles de motifs répétitifs de formule II; et, comme composant c), de 5 à 20% en moles de motifs répétitifs de formule IV.

**4.** Procédé selon la revendication 1 ou 2, caractérisé en ce que les polyesteramides mésomorphes totalement aromatiques contiennent, comme composant a), de 5 à 20% en moles de motifs répétitifs de formule I; comme composant b), de 5 à 20% en moles de motifs répétitifs de formule III; et, comme composant c), de 5 à 20% en moles d'un mélange de motifs répétitifs de formules IV.

**5.** Procédé selon la revendication 1 ou 2, caractérisé en ce que les polyesteramides mésomorphes totalement aromatiques contiennent, comme composant a), de 5 à 20% en moles de motifs répétitifs de formule I; comme composant b), de 5 à 20% en moles de motifs répétitifs de formule III; et, comme composant c), de 5 à 20% en moles de motifs répétitifs de formule IV.

**6.** Procédé selon l'une quelconque des revendications 1 à 5, caractérisé en ce que les polyesteramides mésomorphes totalement aromatiques ont une température de transition vitreuse Tg $\geqq$ 140 °C.

**7.** Procédé selon l'une quelconque des revendications 1 à 6, caractérisé en ce qu'on fait réagir les monomères sous forme des composés hydroxy, amino ou carboxy non dérivatisés, en un procédé en une seule étape et dans les rapports molaires prescrits, avec addition d'anhydride d'acide gras en excès et à température élevée, et on chasse du mélange réactionnel l'anhydride d'acide gras et l'acide gras par distillation.

**8.** Procédé selon l'une quelconque des revendications 1 à 7, caractérisé en ce qu'après la condensation dans la masse fondue, on soumet les polyesteramides totalement aromatiques à une post-condensation en phase solide à une température de 150 à 250 °C.

9. Procédé de fabrication de fils, de feuilles, de fibres, de mousses et de pièces moulées par moulage par injection, pressage ou extrusion, avec utilisation des produits du procédé selon l'une quelconque des revendications 1 à 8.